# EUROPEAN PATENT APPLICATION

(11) **EP 4 675 790 A1**
(43) Date of publication of application: **07.01.2026**
(21) Application number: 25186628.1
(22) Date of filing: 01.07.2025
(51) Int. Cl.: H01M 50/207, H01M 50/244, H01M 50/251, H01M 50/264

(54) **BATTERY FIXING APPARATUS FOR UNINTERRUPTIBLE POWER SUPPLY**

(30) Priority: 04.07.2024 CN 202410895630
(71) Applicant: Lian Zheng Electronics (Shenzhen) Co., Ltd., Guangdong 518101 (CN)
(72) Inventor: (1) CHEN, MIAOMEI, Shenzhen (CN); SU, XIN, Shenzhen (CN); (3) HU, LIN, Shenzhen (CN); FANG, HAOJIE, Shenzhen (CN)
(74) Representative: Schwan Schorer & Partner mbB

(57) **Abstract**

A battery fixing apparatus for an uninterruptible power supply comprises:

a bottom plate **(101)**, configured to carry batteries of the uninterruptible power supply, wherein the bottom plate defines an X-axis direction along a length direction of the bottom plate, a Y-axis direction along a width direction of the bottom plate, and a Z-axis direction along a height direction of the bottom plate;

an intermediate separating plate (**102)**, wherein the intermediate separating plate is vertically connected to the bottom plate along a direction in which the length of the intermediate separating plate is parallel to the X-axis,

the intermediate separating plate has an extension arm (**1022)**, and the extension arm has a first connection structure; and

a first holder (**104)**, wherein the first holder has a second connection structure corresponding to the first connection structure,

the first holder (**104)** is connected, through the first connection structure and the second connection structure, to a position with a predetermined distance from the top end of the intermediate separating plate, and

the bottom plate **(101)**, the intermediate separating plate (**102)**, and the first holder **(104)** form a first battery (**103)** accommodating area.

## Description

### TECHNICAL FIELD

The present invention belongs to the field of uninterruptible power supply technologies, and in particular, relates to a battery fixing apparatus for an uninterruptible power supply (UPS).

### BACKGROUND

The statements in this part are merely intended to provide background information related to the present invention, to help understand the present invention. This background information does not necessarily constitute the conventional technology.

An uninterruptible power supply (Uninterruptible Power System) is a voltage-stable and frequency-stable alternating current power supply that includes a battery and is mainly composed of a rectifier and an inverter. The UPS uses the battery mainly to provide uninterrupted power supply to computer and communication network systems or industrial control systems, industrial devices that require continuous operation, and the like, such as computers, servers, storage devices, and network devices, when the power is off. When an input of a mains supply is normal, the UPS stabilizes the voltage of the mains supply and supplies the mains supply to a load for use and to charge the battery at the same time. When the mains supply fails, the UPS provides the power of the battery to the load to keep the load working normally and protect the software and hardware of the load from damage.

In a traditional UPS, a battery is fixed by locking two battery baffles on a side and the top of the case with screws to the intermediate separating plate to achieve a battery fixing function. The structure strength is relatively weak and the product does not meet a standard drop test requirement. The layout utilization of space in the case is poor. An overall battery placement manner determines space used by the whole case in a height direction. An imperfect space layout design results in an increase in the size of other materials used together, such as outline sheet metal parts, cushions, and cartons, and then increases entire machine costs.

Therefore, it is necessary to improve the manner of fixing an uninterruptible power battery, to make a battery layout reasonable while ensuring the structure strength of battery fixing, thereby improving space utilization of the case, and reducing costs.

### SUMMARY

An objective of the present invention is to provide a battery fixing apparatus for an uninterruptible power supply, including:
a bottom plate, configured to carry batteries of the uninterruptible power supply, wherein the bottom plate defines an X-axis direction along a length direction of the bottom plate, a Y-axis direction along a width direction of the bottom plate, and a Z-axis direction along a height direction of the bottom plate;
an intermediate separating plate, wherein the intermediate separating plate is vertically connected to the bottom plate along a direction in which the length of the intermediate separating plate is parallel to the X-axis, the intermediate separating plate has an extension arm, and the extension arm has a first connection structure; and
a first holder, wherein the first holder has a second connection structure corresponding to the first connection structure, the first holder is connected, through the first connection structure and the second connection structure, to a position with a predetermined distance from the top end of the intermediate separating plate, and the bottom plate, the intermediate separating plate, and the first holder form a first battery accommodating area.

According to the battery fixing apparatus of the present invention, preferably, a second holder is further included, wherein the second holder has a first member for connecting to the intermediate separating plate and a second member for connecting to the first holder, and the second holder can pivot around the intermediate separating plate; the intermediate separating plate, the second holder, and the first holder form a second battery accommodating area; and
the second holder further has a second locking structure, the first holder further has a first locking structure corresponding to the second locking structure, and the second holder is locked with the first holder through the first locking structure and the second locking structure to fix the batteries in the second battery accommodating area when the second holder pivots around the intermediate separating plate to a predetermined position.

According to the battery fixing apparatus of the present invention, preferably, the second holder and the first holder include a plurality of electrical interface slots for protecting battery wiring terminals of the batteries, the quantity, the size, and the position of the electrical interface slots correspond to the battery wiring terminals, and the battery wiring terminals are embedded in corresponding electrical interface slots when the first holder and the second holder are connected to the intermediate separating plate and the second holder is locked with the first holder; and
the first holder further has at least one cable trough along the Z-axis direction, and some of the wires configured to connect the battery wiring terminals are accommodated in the cable trough to optimize a connection path of the wires.

According to the battery fixing apparatus of the present invention, preferably, bus-bars are disposed in the electrical interface slots so that the batteries are electrically connected in a predetermined manner when the first holder and the second holder are connected to the intermediate separating plate and the second holder is locked with the first holder.

According to the battery fixing apparatus of the present invention, preferably, the first holder further has at least one guide pin, the intermediate separating plate further has at least one punched hole corresponding to the guide pin, and a connection is formed between the first holder and the intermediate separating plate by rotating and pushing the guide pin into the punched hole.

According to the battery fixing apparatus of the present invention, preferably, the second holder and the first holder are made of plastic materials.

According to the battery fixing apparatus of the present invention, preferably, the second holder and the first holder have hollow stiffener structures.

According to the battery fixing apparatus of the present invention, preferably, a tail end of the first member has a pivot, the intermediate separating plate has an accommodating portion corresponding to the pivot, and the pivot and the accommodating portion form a pivot fit in a crossbeam door embedded manner, so that the second holder can pivot around the intermediate separating plate.

According to the battery fixing apparatus of the present invention, preferably, the first member and the second member are disposed in an "L" shape as a whole; the second member has at least one support arm, and the support arm has at least one protruding pin; the first holder has a slot corresponding to the protruding pin; and when the second holder pivots around the intermediate separating plate to the predetermined position, the protruding pin is engaged with the slot to form a locking structure for fixing the batteries.

According to the battery fixing apparatus of the present invention, preferably, the at least one support arm includes a first support arm and a second support arm, and the first support arm and the second support arm are symmetrically disposed on both sides of the second member; the first support arm and the second support arm respectively have a first protruding pin and a second protruding pin; the first holder has a first slot and a second slot corresponding to the first protruding pin and the second protruding pin; and when the second holder pivots around the intermediate separating plate to the predetermined position, the first protruding pin and the second protruding pin are respectively engaged with the first slot and the second slot to form the locking structure for fixing the batteries.

According to the battery fixing apparatus of the present invention, preferably, the quantity and arrangement directions of batteries disposed in the first battery accommodating area are different from those of batteries disposed in the second battery accommodating area. Compared with the conventional technology, the present invention effectively resolves a battery fixing problem for an uninterruptible power supply, ensures structure strength of battery fixing, while causes batteries to be properly distributed in a case, thereby improving the space utilization of the case, and reducing costs. In addition, the first battery accommodating area and the second battery accommodating area are disposed in the battery fixing apparatus, so that the battery fixing apparatus is applicable to UPSs with different load capacities. The second holder and the first holder in the battery fixing apparatus have electrical interface slots that are configured to protect battery wiring terminals, and both of the second holder and the first holder use plastic materials, to effectively avoid a potential safety risk of bumping of the wiring terminals. The second holder uses a screw-free connection for easy removal.

### BRIEF DESCRIPTION OF THE DRAWINGS

The following further describes embodiments of the present invention with reference to the accompanying drawings, where:
FIG. 1 is a schematic diagram of a battery fixing apparatus for an uninterruptible power supply according to an embodiment of the present invention;
FIG. 2 is an exploded view of a battery fixing apparatus for an uninterruptible power supply according to an embodiment of the present invention;
FIG. 3 is a schematic diagram of a battery fixing apparatus with only a first battery accommodating area according to an embodiment of the present invention;
FIG. 4 is a schematic diagram of a circuit connection of a battery of an uninterruptible power supply according to an embodiment of the present invention;
FIG. 5 is a schematic structural diagram of a second holder according to an embodiment of the present invention;
FIG. 6 is a schematic structural diagram of a first holder according to an embodiment of the present invention;
FIG. 7 is a schematic structural diagram of an intermediate separating plate according to an embodiment of the present invention; and
FIG. 8 is a schematic diagram of a second holder pivoting around an intermediate separating plate according to an embodiment of the present invention.

### DETAILED DESCRIPTION

To make the objectives, technical solutions, and advantages of the present invention clearer, the following further describes the present invention in detail through the embodiments with reference to the accompanying drawings. It should be understood that the embodiments described herein are only used to explain the present invention, but are not intended to limit the present invention.

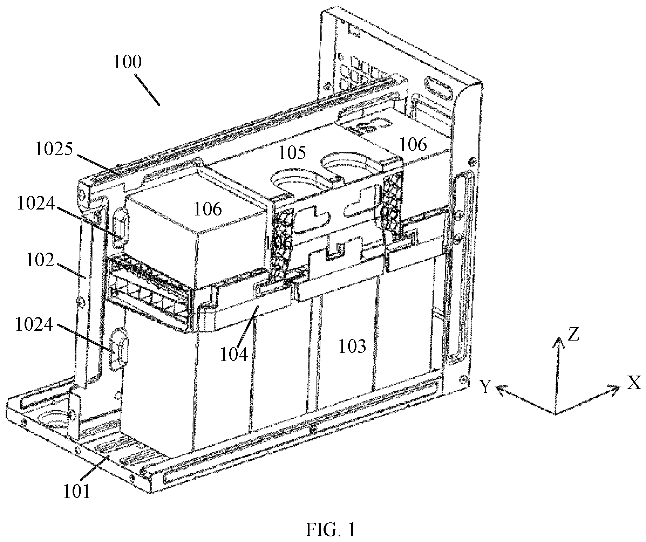

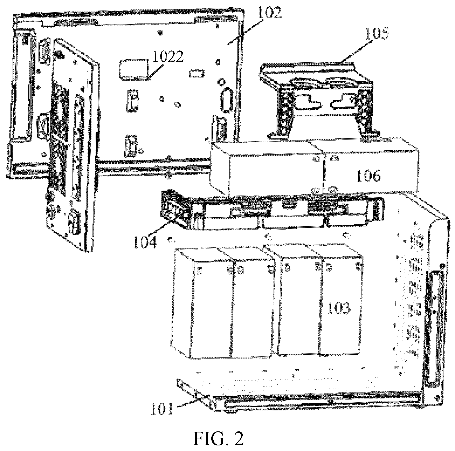

An embodiment of the present invention provides a battery fixing apparatus for an uninterruptible power supply. Refer to the battery fixing apparatus 100 for the uninterruptible power supply shown in FIG. 1 and FIG. 2. The battery fixing apparatus 100 includes a bottom plate 101, an intermediate separating plate 102, a second holder 105, and a first holder 104. Wherein, the bottom plate 101 defines an X-axis direction along the length direction of the bottom plate 101, a Y-axis direction along the width direction of the bottom plate 101, and a Z-axis direction along the height direction of the bottom plate 101. A battery 103 is disposed on the bottom plate 101, and the intermediate separating plate 102 is vertically connected to the bottom plate 101 along a direction in which the length of the intermediate separating plate is parallel to the X-axis. The intermediate separating plate 102 has an extension arm 1022, and the extension arm 1022 has a first connection structure. The first holder 104 has a second connection structure corresponding to the first connection structure, and the first holder 104 is connected, through the first connection structure and the second connection structure, to a position with a predetermined distance from the top end 1025 of the intermediate separating plate 102, so that the first holder 104 is disposed parallel to the bottom plate 101 through the intermediate separating plate 102. Wherein, the top end 1025 is the farthest end of the intermediate separating plate 102 relative to the bottom plate 101 along the Z-axis direction, and the foregoing predetermined distance is properly selected based on the model and the size of a selected battery. The bottom plate 101, the intermediate separating plate 102, and the first holder 104 form a first battery accommodating area. As shown in FIG. 1, a certain quantity of batteries 103 may be accommodated in the first battery accommodating area. The batteries are fixed by using the battery fixing apparatus 100, so that placement of the batteries is more reasonable and compact, thereby effectively improving space layout utilization in a battery case, and reducing costs of supporting materials.

In some embodiments of the present invention, the battery fixing apparatus 100 further includes a second holder 105. The second holder 105 is connected to an upper portion of the intermediate separating plate 102 in a screw-free detachable manner and can pivot around the intermediate separating plate 102. The intermediate separating plate 102, the second holder 105, and the first holder 104 form a second battery accommodating area. The second holder 105 has a second locking structure, and the first holder 104 has a first locking structure corresponding to the second locking structure. The second holder 105 pivots around the intermediate separating plate 102 to a predetermined position, and the second holder 105 is locked with the first holder 104 through the first locking structure and the second locking structure to fix a battery 103 in the second battery accommodating area.

In a first configuration of the battery fixing apparatus 100, as shown in FIG. 1, a certain quantity of batteries 106 may be accommodated in the second battery accommodating area. The battery fixing apparatus 100 shown in FIG. 1 is provided with batteries in both the first battery accommodating area and the second battery accommodating area, and is applicable to a first type of uninterruptible power supply with a relatively larger battery load capacity (for example, 72 V).

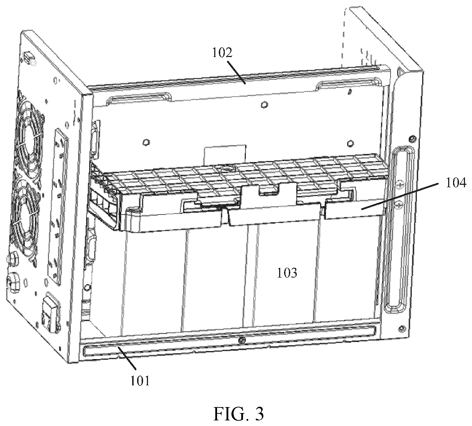

In a second configuration of the battery fixing apparatus 100, as shown in FIG. 3, the detachable second holder 105 is removed from the battery fixing apparatus 100. Since the second holder 105 is connected to the intermediate separating plate 102 in a screw-free manner, this may be easily implemented. In the second configuration, the battery fixing apparatus 100 has only the first battery accommodating area, and the batteries 103 are disposed in the first battery accommodating area. The battery fixing apparatus 100 shown in FIG. 3 is provided with batteries in only the first battery accommodating area, and is applicable to a second type of uninterruptible power supply with a relatively smaller battery load capacity (for example, 48 V).

In some embodiments of the present invention, the first locking structure and the second locking structure are in a rotary assembly relationship. In another embodiment, the first locking structure and the second locking structure are a connection slot and a connection pin that cooperate with each other. In the foregoing configurations, screws are not used for connection, and the structure is simple, which effectively resolves the problem that batteries are not easy to remove during maintenance or repair in the conventional technology.

In some embodiments of the present invention, a quantity of batteries 103 in the first battery accommodating area and a quantity of batteries 106 in the second battery accommodating area may be selected according to a product requirement of a UPS.

In the foregoing embodiments, the first battery accommodating area and the second battery accommodating area are disposed, and a model and a quantity of batteries are properly selected, so that the battery fixing apparatus 100 can be applicable to UPSs with different load capacities, thereby improving product applicability.

In some embodiments of the present invention, the arrangement direction of the battery 103 disposed in the first battery accommodating area is different from that of the battery 106 disposed in the second battery accommodating area. As shown in FIG. 1, in the first battery accommodating area, the battery 103 is disposed along the direction in which the height of the battery 103 is parallel to the Z-axis, and in the second battery accommodating area, the battery 106 is disposed along the direction in which the height of the battery 106 is perpendicular to the Z-axis, thereby providing a more compact and flexible space configuration.

In some embodiments of the present invention, the intermediate separating plate 102 has at least one protrusion 1024, and the protrusion 1024 is separately used for limiting the battery 103 or the battery 106.

In some embodiments of the present invention, the intermediate separating plate 102 separates the bottom plate 101 into a first space and a second space along the Y-axis direction, wherein the first space is used to dispose batteries and the battery fixing apparatus 100, and the second space is used to dispose other electrical components, such as a PCB board.

In some embodiments of the present invention, the second connection structure of the first holder 104 is fixedly connected to the first connection structure of the intermediate separating plate 102 through a threaded fastener.

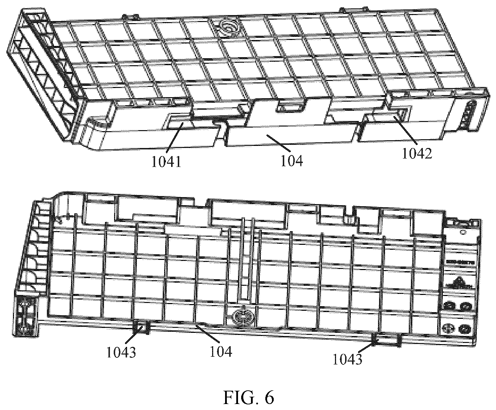

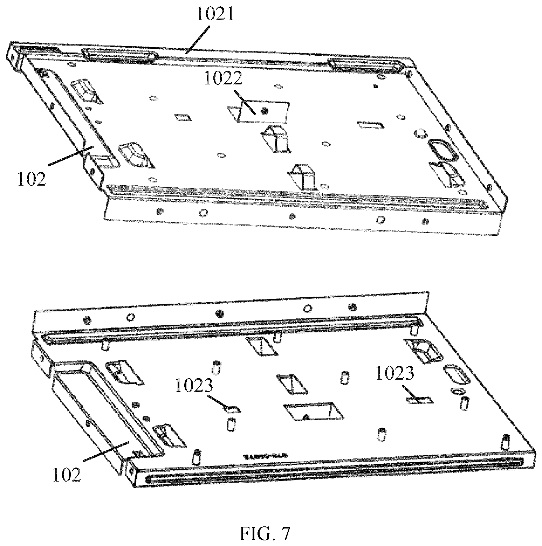

In some embodiments of the present invention, as shown in FIG. 6, the first holder 104 has a guide pin 1043. As shown in FIG. 7, the intermediate separating plate 102 has a punched hole 1023 corresponding to the guide pin 1043. When connecting the first holder 104 to the intermediate separating plate 102, the guide pin 1043 is used as a shaft that is rotated and pushed into the punched hole 1023, and then the first connection structure is connected to the second connection structure through a threaded fastener, so that the first holder 104 is fixedly connected to the intermediate separating plate 102.

In some embodiments of the present invention, the second holder 105 and the first holder 104 are made of non-conductive materials, and further, the second holder 105 and the first holder 104 are made of plastic materials. Such a design effectively resolves the problem that a battery baffle used in the conventional technology is usually a sheet metal part, and is not only relatively expensive but also does not have an insulating and safe electrical performance protection feature.

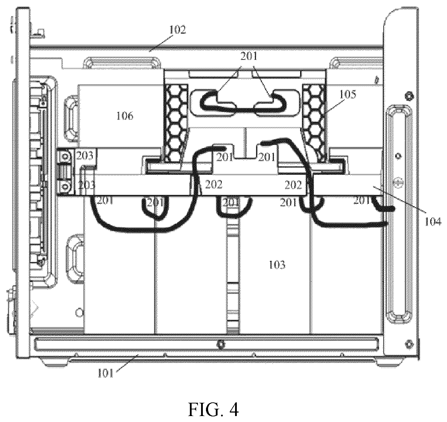

In some embodiments of the present invention, as shown in FIG. 4, both the second holder 105 and the first holder 104 include a plurality of electrical interface slots 201 for protecting battery wiring terminals of the battery, and the quantity, the size, and the position of the electrical interface slots 201 are in a one-to-one correspondence with the battery wiring terminals. The battery wiring terminals are embedded in corresponding electrical interface slots 201 when the second holder 105 and the first holder 104 are connected to the intermediate separating plate 102 and the second holder 105 is locked with the first holder 104. This effectively resolves the problem of insulation between the battery wiring terminals and hardware fasteners or other metal parts, and avoids potential safety problems caused by the battery wiring terminals colliding with a metal cover of the battery case in an extreme state, thereby greatly improving security.

In some embodiments of the present invention, as shown in FIG. 4, the first holder 104 further has at least one cable trough 202 along the Z-axis direction, and some of the wires used to connect the battery wiring terminals are accommodated in the cable trough 202 to optimize the connection paths of the wires. This avoids an increase of other parts and perfectly resolves the wire fixing problem, making cabling more beautiful and the wire connection manner clear, thereby facilitating the operations of front-line operators.

In some embodiments of the present invention, as shown in FIG. 4, the batteries 103 in the first battery accommodating area and the batteries 106 in the second battery accommodating area are connected in series.

In some embodiments of the present invention, the batteries 103 in the first battery accommodating area and the batteries 106 in the second battery accommodating area are connected in parallel.

In some embodiments of the present invention, the batteries 103 in the first battery accommodating area and the batteries 106 in the second battery accommodating area are connected in a mixed manner including in series and in parallel.

In some embodiments of the present invention, bus-bars are disposed in the electrical interface slots 201, so that when the second holder 105 and the first holder 104 are connected to the intermediate separating plate 102 and the second holder 105 is locked with the first holder 104, the batteries 103 and the batteries 106 may be electrically connected in a predetermined manner, including wires in a series connection, a parallel connection, and a serial-parallel connection.

In some embodiments of the present invention, as shown in FIG. 4, the first holder 104 is at least further connected to the intermediate separating plate 102 or other parts in the battery case through at least one threaded structure, to enhance the structure strength of battery fixing apparatus 100.

In some embodiments of the present invention, the second holder 105 and the first holder 104 have hollow stiffener structures. Still further, the hollow stiffener structure may be a rectangular stiffener structure or a honeycomb stiffener structure. Therefore, materials can be saved without reducing the structure strength, and material costs can be reduced, obtaining an optimal product design.

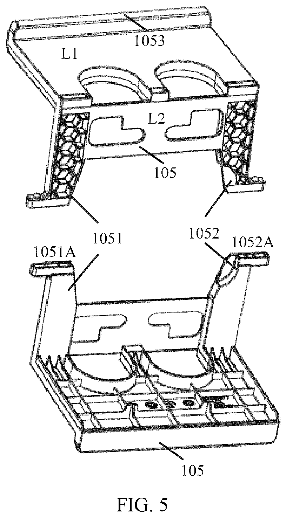

In some embodiments of the present invention, as shown in FIG. 5, the second holder 105 has a first member L1 for connecting to the intermediate separating plate 102 and a second member L2 for connecting to the first holder 104. The first member L1 and the second member L2 are disposed in an "L" shape as a whole. Optionally, the first member L1 and/or the second member L2 is provided with at least one locking member for fixing a battery. When the second holder 105 is locked with the first holder 104, the at least one locking member is configured to lock the installed battery.

In some embodiments of the present invention, the second member L2 has at least one support arm, and each of the at least one support arm has at least one protruding pin. The first holder 104 has a slot corresponding to the protruding pin. When the second holder 105 pivots around the intermediate separating plate 102 to the predetermined position, the at least one protruding pin is engaged with the corresponding slot to form a locking structure for fixing the battery.

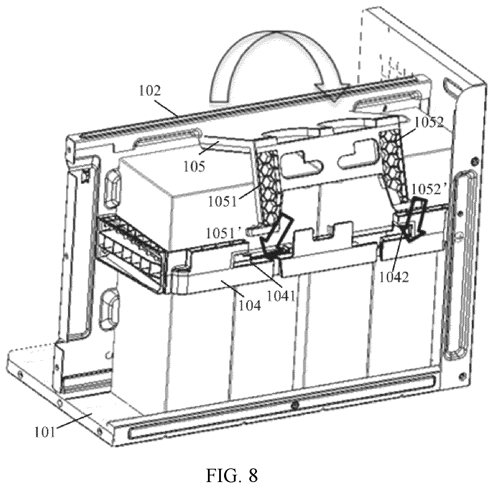

In some embodiments of the present invention, as shown in FIG. 5, the second member L2 has a first support arm 1051 and a second support arm 1052, and the first support arm 1051 and the second support arm 1052 respectively have a first protruding pin 1051A and a second protruding pin 1052A that extend along the X-axis direction. As shown in FIG. 6, the first holder 104 has a first slot 1041 and a second slot 1042 corresponding to the first protruding pin 1051A and the second protruding pin 1052A. As shown in FIG. 1 and FIG. 8, when the second holder 105 pivots around the intermediate separating plate 102 to the predetermined position, the first protruding pin 1051A and the second protruding pin 1052A are respectively engaged with the first slot 1041 and the second slot 1042 to form the locking structure for fixing the battery. A screw-free detachable connection is used between the second holder 105 and the intermediate separating plate 102, and a snap-in locking structure is used between the second holder 105 and the first holder 104, so that easy assembly and disassembly of batteries are implemented while saving assembly costs.

In some embodiments of the present invention, as shown in FIG. 5, a tail end of the first member L1 of the second holder 105 has a pivot 1053. As shown in FIG. 7, the intermediate separating plate 102 has an accommodating portion 1021 corresponding to the pivot 1053, and the pivot 1053 and the accommodating portion 1021 form a pivot fit in a crossbeam door embedded manner. As shown in FIG. 8, the second holder 105 can pivot around the intermediate separating plate 102.

In some embodiments of the present invention, as shown in FIG. 5, the first support arm 1051 and the second support arm 1052 are symmetrically distributed on both sides of the second member L2 of the second holder 105.

Through the foregoing specific embodiments of the present invention, the present invention effectively resolves a battery fixing problem for an uninterruptible power supply, ensures structure strength of battery fixing, while causes batteries to be properly distributed in a case, thereby improving the space utilization of the case, and reducing costs. In addition, the first battery accommodating area and the second battery accommodating area are disposed in the battery fixing apparatus, so that the battery fixing apparatus is applicable to UPSs with different load capacities, improving the product applicability. The second holder and the first holder in the battery fixing apparatus have electrical interface slots that are configured to protect battery wiring terminals, and both of the second holder and the first holder use plastic materials, to effectively avoid a potential safety risk of bumping of the wiring terminals. At the same time, the second holder uses a screw-free connection for easy removal.

Although the present invention has been described through preferred embodiments, the present invention is not limited to the embodiments described herein, and includes various changes and variations without departing from the scope of the present invention.

## Claims

1. A battery fixing apparatus for an uninterruptible power supply, comprising:
a bottom plate, configured to carry batteries of the uninterruptible power supply, wherein the bottom plate defines an X-axis direction along a length direction of the bottom plate, a Y-axis direction along a width direction of the bottom plate, and a Z-axis direction along a height direction of the bottom plate;
an intermediate separating plate, wherein the intermediate separating plate is vertically connected to the bottom plate along a direction in which the length of the intermediate separating plate is parallel to the X-axis, the intermediate separating plate has an extension arm, and the extension arm has a first connection structure; and
a first holder, wherein the first holder has a second connection structure corresponding to the first connection structure, the first holder is connected, through the first connection structure and the second connection structure, to a position with a predetermined distance from the top end of the intermediate separating plate, and the bottom plate, the intermediate separating plate, and the first holder form a first battery accommodating area.

2. The battery fixing apparatus according to claim 1, further comprising:
a second holder, wherein the second holder has a first member for connecting to the intermediate separating plate and a second member for connecting to the first holder, and the second holder can pivot around the intermediate separating plate; the intermediate separating plate, the second holder, and the first holder form a second battery accommodating area; and
the second holder further has a second locking structure, the first holder further has a first locking structure corresponding to the second locking structure, and the second holder is locked with the first holder through the first locking structure and the second locking structure to fix the batteries in the second battery accommodating area when the second holder pivots around the intermediate separating plate to a predetermined position.

3. The battery fixing apparatus according to claim 2, wherein the first holder and the second holder comprise a plurality of electrical interface slots for protecting battery wiring terminals of the batteries, the quantity, the size, and the position of the electrical interface slots correspond to the battery wiring terminals, and the battery wiring terminals are embedded in corresponding electrical interface slots when the first holder and the second holder are connected to the intermediate separating plate and the second holder is locked with the first holder; and
the first holder further has at least one cable trough along the Z-axis direction, and some of the wires configured to connect the battery wiring terminals are accommodated in the cable trough to optimize a connection path of the wires.

4. The battery fixing apparatus according to claim 3, wherein bus-bars are disposed in the electrical interface slots so that the batteries are electrically connected in a predetermined manner when the first holder and the second holder are connected to the intermediate separating plate and the second holder is locked with the first holder.

5. The battery fixing apparatus according to claim 1 or 2, wherein the first holder further has at least one guide pin, the intermediate separating plate further has at least one punched hole corresponding to the guide pin, and a connection is formed between the first holder and the intermediate separating plate by rotating and pushing the guide pin into the punched hole.

6. The battery fixing apparatus according to claim 2 or 3, wherein the first holder and the second holder have hollow stiffener structures.

7. The battery fixing apparatus according to claim 2 or 3, wherein a tail end of the first member has a pivot, the intermediate separating plate has an accommodating portion corresponding to the pivot, and the pivot and the accommodating portion form a pivot fit in a crossbeam door embedded manner, so that the second holder can pivot around the intermediate separating plate.

8. The battery fixing apparatus according to claim 2 or 3, wherein the first member and the second member are disposed in an "L" shape as a whole; the second member has at least one support arm, and the support arm has at least one protruding pin; the first holder has a slot corresponding to the protruding pin; and when the second holder pivots around the intermediate separating plate to the predetermined position, the protruding pin is engaged with the slot to form a locking structure for fixing the batteries.

9. The battery fixing apparatus according to claim 8, wherein the at least one support arm comprises a first support arm and a second support arm, and the first support arm and the second support arm are symmetrically disposed on both sides of the second member; the first support arm and the second support arm respectively have a first protruding pin and a second protruding pin; the first holder has a first slot and a second slot corresponding to the first protruding pin and the second protruding pin; and when the second holder pivots around the intermediate separating plate to the predetermined position, the first protruding pin and the second protruding pin are respectively engaged with the first slot and the second slot to form the locking structure for fixing the batteries.

10. The battery fixing apparatus according to claim 2, wherein the quantity and arrangement directions of batteries disposed in the first battery accommodating area are different from those of batteries disposed in the second battery accommodating area.
